# FASCICULE DE BREVET EUROPEEN

(11) **EP 2 810 265 B1**
(45) Date de publication et mention de la délivrance du brevet: **25.10.2017**
(21) Numéro de dépôt: 13706586.8
(22) Date de dépôt: 30.01.2013
(51) Int. Cl.: G08C 17/02

(54) **PROCÉDÉ ET DISPOSITIF DE COMMUNICATION POUR LA COMMANDE À DISTANCE D'UN ACTIONNEUR POUR UN ÉQUIPEMENT MOBILE DU BÂTIMENT**
KOMMUNIKATIONSVERFAHREN UND VORRICHTUNG ZUR FERNSTEUERUNG EINES AKTUATORS FÜR MOBILE VORRICHTUNGEN IN EINEM GEBÄUDE
COMMUNICATION METHOD AND DEVICE FOR REMOTE CONTROL OF AN ACTUATOR FOR MOBILE EQUIPMENT IN A BUILDING

(30) Priorité: 02.02.2012 FR 1250967
(43) Date de publication de la demande: 10.12.2014
(73) Titulaire: SOMFY ACTIVITES SA, 74300 Cluses (FR)
(72) Inventeur: PELLARIN, Florent, 74960 MEYTHET (FR)
(74) Mandataire: Verriest, Philippe
(86) Numéro de dépôt international: PCT/FR2013/050181
(87) Numéro de publication internationale: WO 2013/114035

(56) Documents cités:
- WO-A1-2005/119621
- WO-A1-2011/063182

## Description

La présente invention concerne un dispositif de communication pour la commande à distance d'un actionneur pour un équipement mobile du bâtiment tel qu'un volet roulant, store ou rideau et un procédé de configuration d'un tel dispositif.

Il est connu d'utiliser un dispositif de communication comprenant un récepteur et une unité de traitement des données destinée à recevoir un signal en provenance du récepteur et à traiter ce signal reçu en tant que trame d'un mode de communication.

Un tel type de dispositif connu permet notamment de réaliser la commande à distance d'un actionneur pour un équipement mobile du bâtiment, en particulier du type fermeture, par exemple une porte, un portail ou une fenêtre, ou de type protection solaire, écran de projection multimédia ou encore trappe de ventilation.

Différents types de protocoles de communications existant permettent de réaliser une telle commande à distance. En particulier, le document EP1696402 décrit un tel type de protocole. Des protocoles connus sous les noms correspondant à des marques déposées RTS®, io-homecontrol® , z-wave®, ou Zigbee® sont également utilisés à ces fins.

Voir aussi le document WO2011/063182 qui décrit l'utilisation d'un premier protocole omnidirectionnel, entre un contrôleur et un équipement réseau, permettant d'échanger des informations de connectivité afin de permettre l'utilisation par la suite d'un deuxième protocole directionnel plus performant. Il apparaît toutefois que les bandes de fréquences utilisables dans des pays ou des régions différentes pour une communication sur la base des protocoles mentionnés ci-dessus sont distinctes. Ainsi, chaque dispositif est spécifique d'un type de protocole et d'une bande de fréquence déterminée, et est donc spécifique d'un pays ou d'une région donnée.

Cette absence d'harmonisation entre les pays des fréquences radio autorisées et donc utilisables conduit à fabriquer des produits spécifiques à chaque pays de façon à ce que ce produit communique sur la bande de fréquences autorisée.

Une stratégie de production de ce type tend à segmenter la production des lots de produits, chaque lot étant spécifique à une zone correspondant à un ensemble de pays ou de régions utilisant les mêmes types de bandes de fréquences et/ou de protocoles, et à utiliser des références de produits différentes pour chaque lot distinct.

Il en découle une augmentation des coûts et de la complexité de la fabrication des produits, étant donné le nombre important de lots et de leur faible taille. De la même façon les tests de produits sont multipliés par le nombre de lots. Enfin, un stock dormant important est constitué car un lot ne peut être écoulé que dans la zone qui lui est propre, et il n'est pas possible d'utiliser le stock d'un lot donné pour compenser une demande exceptionnelle concernant une zone différente.

La présente invention a pour but de résoudre tout ou partie des inconvénients mentionnés ci-dessus.

A cet effet, la présente invention a pour objet un procédé de fonctionnement d'un dispositif de communication pour la commande à distance d'un actionneur pour un équipement mobile du bâtiment comprenant les étapes consistant à :
a) recevoir un premier signal selon un mode de communication de configuration déterminé,
b) définir un mode de communication opérationnel en fonction d'au moins une partie du contenu du premier signal reçu,
c) recevoir un deuxième signal selon le mode de communication opérationnel,
d) interpréter le deuxième signal reçu conformément au mode de communication opérationnel, de façon à identifier des données de commande dans le deuxième signal reçu.

Grâce aux dispositions selon l'invention, le dispositif de communication présente deux modes de fonctionnement distincts, un mode de fonctionnement dit de configuration et un mode de fonctionnement dit opérationnel.

Le mode de fonctionnement opérationnel correspond à l'interprétation des signaux reçus (depuis une télécommande ou depuis un outil dédié) en tant que commandes à exécuter par l'actionneur, par exemple « monter », « stop », « descendre », ou en tant qu'informations en provenance des capteurs, ou encore en tant que compte rendus d'erreurs reçus au niveau de la télécommande ou de l'outil dédié.

Dans le cas des dispositifs de communication bidirectionnels, le mode de fonctionnement opérationnel peut correspondre aussi à l'émission par l'actionneur des signaux comprenant des comptes rendus d'exécution des commandes.

Le mode de communication avec la télécommande ou avec l'outil dédié, utilisé par le dispositif lors de la mise en oeuvre du mode de fonctionnement opérationnel est appelé mode de communication opérationnel.

Le mode de fonctionnement de configuration a pour but la définition du mode de communication opérationnel.

Le mode de communication avec la télécommande ou avec l'outil dédié, utilisé par le dispositif lors de la mise en oeuvre du mode de fonctionnement de configuration est appelé mode de communication de configuration.

Un paramétrage ou une reconfiguration du mode de communication opérationnel utilisé par le dispositif est possible, en permettant ainsi l'utilisation d'un même type de dispositif pour de multiples modes de communication opérationnels.

A titre d'exemple, pour un dispositif faisant partie d'un actionneur pour un équipement mobile du bâtiment, le procédé peut être mis en oeuvre lors d'une opération réalisée lors de l'installation de l'actionneur sur site, par exemple réglage de fin de course ou appairage. Le mode de communication opérationnel du dispositif peut être à nouveau modifié réalisant les étapes du procédé lors d'une mise à jour, d'une réinitialisation, d'une phase de maintenance ou de paramétrage du dispositif.

Les signaux incidents qui permettent d'identifier le mode de communication opérationnel à utiliser peuvent être fournis par un outil de configuration dédié. Le dispositif se sert de cette référence pour définir son propre mode de communication opérationnel.

Grâce aux dispositions de l'invention, une diminution du nombre de références de dispositifs peut être obtenue, ce qui permet une fabrication optimisée des produits. L'adaptation des produits à de nouveaux modes de communication est par ailleurs facilitée. Il suffit en effet d'introduire de nouveaux paramètres correspondant à de nouveaux modes de communication dans la programmation du dispositif de communication. De cette manière, le dispositif de communication dispose de plusieurs modes de communication utilisables sélectivement.

Selon un aspect de l'invention, les modes de communications distincts correspondent à des types de protocoles de communications différents.

Selon un aspect de l'invention, les modes de communications distincts correspondent à des communications sur des bandes de fréquences distinctes.

Selon un aspect de l'invention, la définition du mode de communication opérationnel comprend une étape de téléchargement des paramètres de définition du mode de communication opérationnel.

Il est à noter qu'un tel téléchargement peut intervenir lors du premier téléchargement du logiciel sur le dispositif, lors d'une première utilisation ou d'une configuration du dispositif, incluant alors une mise à jour du logiciel et/ou des données à intégrer au dispositif.

Pour la mise en oeuvre d'un mode de fonctionnement qui nécessite uniquement un changement de fréquences radio, l'outil transmet au dispositif de communication les informations nécessaires à la programmation des circuits radio.

Ces informations varient en fonction de la version matérielle du dispositif de communication. L'information concernant cette version matérielle peut être obtenue par une réponse directe à l'outil de configuration si le dispositif de communication est bidirectionnel, ou par une autre voie de retour comme des séquences de mouvements du moteur, ou par un étiquetage de l'actionneur.

Les paramètres du mode de communication opérationnel peuvent être transmis par exemple sous forme de tableau prédéfini ou par une suite de paires (adresse, valeur) correspondant aux adresses des registres mappés en mémoire du dispositif de communication et aux valeurs à écrire à ces adresses.

Les valeurs par défaut des registres sont configurées pour un fonctionnement dans le (ou un des) mode(s) de communication de configuration.

Selon un aspect de l'invention, la définition du protocole de communication opérationnel comprend une étape de téléchargement de tout ou partie d'un composant logiciel.

Ainsi, un nouveau logiciel, comprenant une nouvelle pile de protocole (Pj), peut être téléchargé par l'outil.

Ce téléchargement concerne notamment tout ou partie du composant logiciel applicatif destiné à l'interprétation du mode de communication opérationnel.

Ces dispositions permettent de minimiser les éléments logiciels et les données à intégrer au dispositif avant sa première utilisation.

Par exemple, un dispositif de communication en sortie de production peut ne contenir qu'un composant logiciel correspondant au mode de communication de configuration. Ce dispositif ne peut donc fonctionner opérationnellement avant le téléchargement du logiciel applicatif effectué à l'installation par un outil sécurisé et/ou par une personne autorisée. Dans ces conditions, un actionneur volé pendant le stockage ne peut être utilisé.

Le dispositif de communication peut être informé du passage en phase de téléchargement d'un nouveau logiciel par une séquence prédéfinie, par exemple :
- Commande d'arrêt du moteur,
- Emission par l'outil de configuration d'un signal suivant une séquence prédéfinie.

Alternativement, l'outil peut envoyer une commande spécifique pour demander au dispositif de communication de passer en phase de téléchargement.

Le dispositif de communication peut effacer le logiciel applicatif enregistré dans sa mémoire réinscriptible et garder uniquement le logiciel de téléchargement. Ce logiciel de téléchargement, connu aussi sous le nom anglais « boot loader » permet de transmettre de manière fiable le nouveau logiciel applicatif destiné à l'interprétation du mode de communication opérationnel, par exemple en utilisant des paquets de taille prédéfinie (512 octets); la réception correcte de ces paquets peut être confirmée par le dispositif de communication, qui envoie un message d'acquittement à l'outil.

Si le dispositif est installé et utilise pour son fonctionnement opérationnel des paramètres fonctionnels à réutiliser après le téléchargement, le procédé de téléchargement peut comprendre une sous-étape de sauvegarde de ces paramètres préalable au téléchargement et une étape de restauration des paramètres ultérieure au téléchargement.

Selon un aspect de l'invention, la définition du mode de communication opérationnel utilise des caractéristiques, notamment la bande de fréquence à utiliser et le type de protocole de communication, contenues dans le signal reçu selon le mode de communication de configuration.

Cette définition du mode de communication opérationnel peut être qualifiée d'explicite, car les paramètres de définition du mode de communication sont définis directement à partir des informations contenues dans le signal reçu selon le mode de communication de configuration.

Selon un aspect de l'invention, la définition du mode de communication opérationnel comprend une étape d'émission par le dispositif de communication d'un troisième signal comprenant une liste de modes de communication opérationnels susceptibles d'être mis en oeuvre par le dispositif de communication, et une étape de réception par le dispositif de communication d'un quatrième signal contenant une indication de sélection du mode de communication opérationnel parmi les modes de communication opérationnels susceptibles d'être mis en oeuvre par le dispositif de communication.

Selon un aspect de l'invention, plusieurs modes de communication de configuration sont utilisables, et une écoute de signaux reçus selon la pluralité de modes de communication de configuration est réalisée.

Selon un aspect de l'invention, la compatibilité du signal reçu avec un mode de communication de configuration sélectionné est vérifiée. En particulier, selon un aspect de l'invention un code de vérification d'erreur d'une trame de signal reçu est calculé, ou encore, selon un autre aspect de l'invention, la conformité d'une séquence de signal reçu avec le préambule d'une trame appartenant du type de protocole correspondant au mode de communication de configuration sélectionné est vérifiée.

Ces dispositions permettent de vérifier simplement la conformité du signal reçu avec un mode de communication de configuration sélectionné, en se basant notamment sur la reconnaissance du préambule d'une trame de protocole. La reconnaissance de ce préambule permet de confirmer que le décodage radiofréquence, le décodage des éléments binaires, le débit et/ou la séquence du signal sont conformes à celle du mode de communication de configuration sélectionné, ce qui dans la plupart des cas est suffisant à sa caractérisation.

Selon un aspect de l'invention, la détermination d'un mode de communication de configuration pour le dispositif de communication comprend les étapes consistant à :
a') Sélectionner un mode de communication de configuration particulier parmi une pluralité de modes de communication de configuration utilisables par le dispositif de communication,
b') Attendre la réception d'un signal pendant un intervalle de temps déterminé,
c') Si aucun signal n'est reçu dans l'intervalle de temps déterminé, retourner à l'étape a') de sélection d'un mode de communication particulier en sélectionnant un autre mode de communication de configuration parmi la pluralité de modes de communication de configuration utilisables par le dispositif de communication,
d') Si un signal est reçu dans l'intervalle de temps déterminé, procéder à une tentative d'interprétation du signal reçu selon le mode de communication de configuration sélectionné,
e') Si le signal reçu est conforme au mode de communication de configuration sélectionné, déterminer ledit mode de communication de configuration sélectionné comme mode de communication de configuration déterminé du dispositif;
f) Si le signal reçu n'est pas conforme au mode de communication sélectionné, retourner à l'étape a') de sélection d'un mode de communication de configuration particulier en sélectionnant un autre mode de communication de configuration parmi la pluralité de modes de communication de configuration utilisables par le dispositif de communication.

La présente invention a également pour objet un procédé de configuration d'un dispositif de communication pour la commande à distance d'un actionneur pour un équipement mobile du bâtiment comprenant les étapes consistant à :
a") définir un mode de communication opérationnel à utiliser par le dispositif de communication ;
b") générer au moins un signal selon un mode de communication de configuration, dont le contenu comprend des informations relatives au mode de communication opérationnel à utiliser par le dispositif de communication.

Ce procédé peut être mis en oeuvre par une télécommande ou par un outil de configuration dédié.

Selon un aspect de l'invention, le signal généré selon le mode de communication de configuration comprend les caractéristiques du mode de communication opérationnel, et notamment la bande de fréquence à utiliser et/ou le type de protocole de communication.

Selon un aspect de l'invention, le procédé de configuration comprend une sous-étape de réception d'un troisième signal comprenant une liste des modes de communication opérationnels susceptibles d'être mis en oeuvre par le dispositif de communication et une sous-étape d'émission d'un quatrième signal contenant une indication de sélection du mode de communication opérationnel dans la liste des modes de communication opérationnels susceptibles d'être mis en oeuvre par le dispositif de communication.

Selon un aspect de l'invention, l'étape a") de définition du mode de communication opérationnel comprend une étape de réception par l'outil de configuration d'une liste de modes de communication opérationnels susceptibles d'être mis en oeuvre par le dispositif de communication.

Selon un aspect de l'invention, l'étape b") de génération d'au moins un signal selon un mode de communication de configuration comprend une étape de téléchargement vers le dispositif des paramètres de définition du mode de communication opérationnel.

Selon un aspect de l'invention l'étape b") de génération d'au moins un signal selon un mode de communication de configuration comprend une étape de téléchargement vers le dispositif d'un composant logiciel.

Selon un aspect de l'invention, une étape de sélection d'un mode de communication de configuration est réalisée.

La présente invention a également pour objet un dispositif de communication pour la commande à distance d'un actionneur pour un équipement mobile du bâtiment comprenant un récepteur et une unité de traitement des données destinée à recevoir un signal en provenance du récepteur et à traiter ce signal reçu en tant que trame d'un mode de communication (de configuration ou opérationnel), le dispositif de communication étant agencé pour mettre en oeuvre un procédé de fonctionnement tel que décrit précédemment.

Comme déjà mentionné, le dispositif présente un premier mode de fonctionnement de configuration, correspondant aux premières étapes a) et b) du procédé de fonctionnement et un second mode de fonctionnement opérationnel, correspondant aux étapes c) et d) du procédé, dans lequel le mode de communication opérationnel est utilisé pour recevoir des signaux de commande ou des compte rendus de réception.

Selon un aspect de l'invention, l'unité de traitement est agencée pour mettre en oeuvre son mode de fonctionnement de configuration lors de la première utilisation du dispositif.

Selon un aspect de l'invention, l'unité de traitement est agencée pour configurer le récepteur de façon à permettre une réception dans une bande de fréquence déterminée.

Selon un aspect de l'invention, le dispositif comprend une unité d'alimentation électrique agencée de façon à fournir une alimentation électrique dont les caractéristiques de sortie sont indépendantes des caractéristiques d'entrée, en particulier une alimentation par batteries ou une alimentation à découpage.

Selon d'autres aspects de l'invention :
- le récepteur permet une communication à des fréquences comprises entre 200 MHz et 1 GHz.
- le récepteur permet une communication à des fréquences comprises entre 500 MHz et 1 GHz.

Il est également possible que les bandes de fréquences utilisées soient discontinues, avec par exemple une première bande de fréquence autour de 433MHz et une deuxième autour de 868 MHz.

Selon un aspect de l'invention, le dispositif comprend un émetteur, l'unité de traitement étant agencée pour configurer le cas échéant l'émetteur.

Dans le cas où le dispositif comprend un émetteur, une configuration est réalisée pour l'émetteur. Cette configuration permet de paramétrer les communications en retour du dispositif vers une source dans le cas d'un protocole bidirectionnel. Les paramètres de configuration de l'émetteur peuvent être définis à partir du contenu des trames reçues selon le mode de communication de configuration ou déduits de la configuration du récepteur.

Selon un aspect de l'invention, le récepteur utilise une communication par ondes radiofréquence.

La présente invention a également pour objet un actionneur électromécanique pour un équipement mobile du bâtiment comprenant un dispositif de communication tel que décrit précédemment, un moteur, et une unité de commande pouvant être distincte ou confondue avec l'unité de traitement, l'unité de commande étant agencée pour commander le moteur en fonction de signaux reçus par le récepteur selon le mode de communication opérationnel.

La présente invention a également pour objet une télécommande bidirectionnelle pour la commande à distance d'un actionneur électromagnétique comprenant un dispositif de communication tel que décrit précédemment.

La présente invention a également pour objet un outil de configuration d'un dispositif de communication pour la commande à distance d'un actionneur pour un équipement mobile du bâtiment, agencé pour la mise en oeuvre d'un procédé de configuration tel que décrit précédemment et comprenant un émetteur et une unité de traitement.

La présente invention concerne également un ensemble comprenant un dispositif de communication tel que décrit précédemment et un outil de configuration agencé pour permettre la sélection d'un ou plusieurs mode de communication de configuration et d'un mode de communication opérationnel et pour générer au moins un trame selon l'au moins un mode de communication de configuration.

De toute façon, l'invention sera bien comprise à l'aide de la description qui suit, en référence aux dessins schématiques annexés représentant, à titre d'exemple non limitatif, plusieurs modes de réalisation d'un dispositif selon l'invention ainsi que plusieurs modes de mise en oeuvre des procédés selon l'invention.
La figure 1 est un schéma représentatif d'un premier mode de réalisation d'un dispositif selon l'invention.
La figure 2 est un schéma représentatif d'un second mode de réalisation d'un dispositif selon l'invention intégré dans un actionneur d'un équipement mobile du bâtiment.
La figure 3 est un schéma représentatif d'un second mode de réalisation d'un dispositif selon l'invention intégré dans une télécommande permettant des communications bidirectionnelles.
La figure 4 est un tableau illustrant différents modes de communications correspondant à des bandes de fréquences et à des types de protocoles distincts.
La figure 5 illustre un exemple de format de trame pouvant être utilisé dans le cadre de la commande d'un actionneur d'équipement mobile du bâtiment.
La figure 6 est un organigramme d'un procédé de fonctionnement selon l'invention.
La figure 7 est un organigramme représentant l'étape de choix par un dispositif de communication d'un mode de communication opérationnel selon différents modes de mises en oeuvre d'un procédé selon l'invention.
La figure 8 est un organigramme représentant un organigramme d'un procédé de configuration mis en oeuvre par un outil de configuration d'un dispositif selon l'invention.

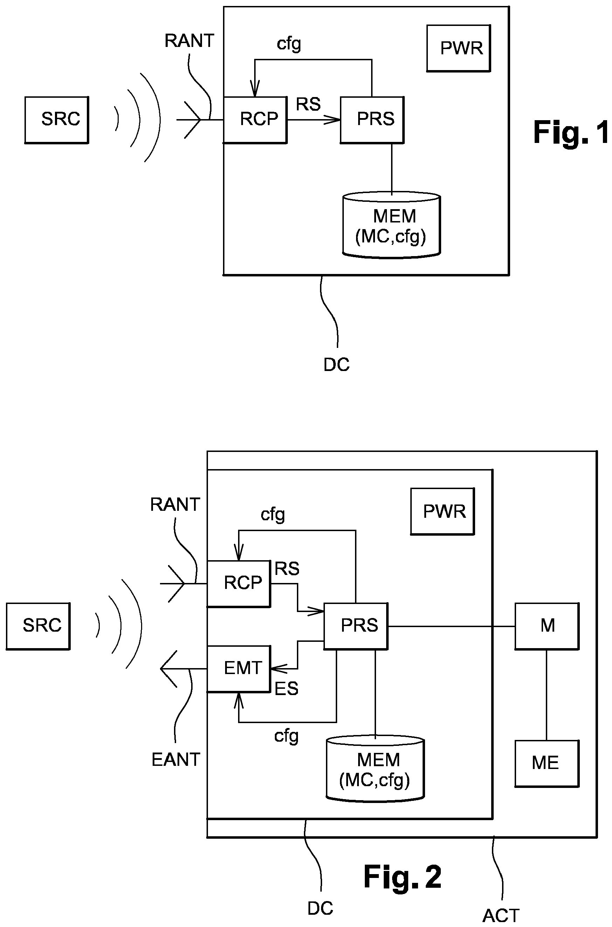

Selon un mode de réalisation représenté sur la figure 1, un dispositif de communication DC selon l'invention comprend un récepteur RCP, associée à une antenne de réception RANT et une unité de traitement des données PRS destinés à recevoir et à traiter les signaux en provenance du récepteur RCP.

Le récepteur RCP est dans ce mode de réalisation un récepteur radiofréquence analogique ou un récepteur radiofréquence numérique, par exemple dans le cas où un protocole du type RTS® doit être pris en compte.

L'unité de traitement est agencée de façon à interpréter des signaux reçus selon au moins un mode de communication de configuration MCi et selon une pluralité de modes de communications opérationnels MUk utilisables par le dispositif de communication DC.

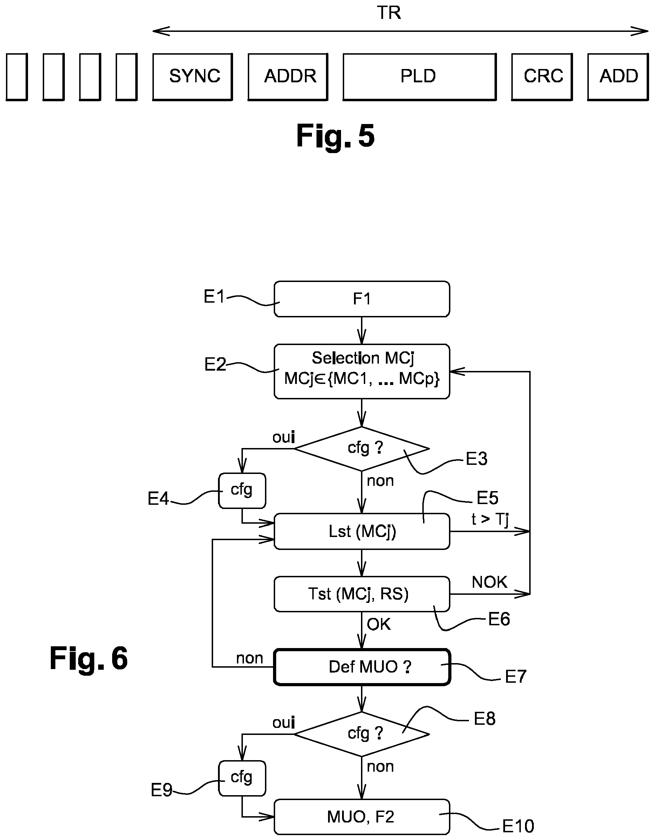

On entend ici par mode de communication MCi ou MUk l'utilisation d'un protocole de communication particulier Pj dans une bande de fréquence BFk particulière, comme cela est illustré sur la figure 5. Bien entendu, le nombre de protocoles de communications utilisables et le nombre de bande de fréquences peuvent varier suivant les modes de réalisation. Les différents modes de communications sont symbolisés en utilisant un indice i, j ou k et donc en désignant les modes de communication comme les modes MCj, MUk, j et k pouvant varier de 1 à p, pour faciliter l'explication. De même, les différents protocoles P et les bandes de fréquence BF pourront être représentés avec un indice. Les références MC, MU, BF et P pourront toutefois être utilisées selon les cas avec ou sans indices.

Ainsi, les modes de communication MCj, MUk distincts peuvent correspondre à des types de protocoles Pi de communication différents, à savoir par exemple les protocoles de communications RTS®, io-homecontrol®, Zigbee® ou z-wave®.

De même, les modes de communications distincts peuvent correspondre à des communications sur des bandes de fréquences BFm distinctes.

Il apparaît que le récepteur RCP, qui est par exemple un récepteur radiofréquence, est en mesure de fonctionner sur plusieurs bandes de fréquence BFk, par exemple des bandes de fréquences définies autour des fréquences nominales suivantes: 433 / 868 / 915 / 960MHz. Les antennes RANT équipant le récepteur ne sont pas toujours efficaces sur l'ensemble des fréquences considérées. Dans ce cas, des types de dispositif DC peuvent être prévus pour des bandes de fréquences distinctes, par exemple, un dispositif fonctionnant pour les bandes de fréquence BF comprises entre 315 à 433 MHz, et un dispositif fonctionnant pour les bandes de fréquence BFk comprises entre 868 à 960 MHz.

En cas d'utilisation d'une antenne fonctionnant sur l'ensemble des fréquences, le même dispositif peut être utilisé sur l'ensemble des fréquences.

A titre d'exemple, dans la bande de fréquence entre de 868MHz à 960MHz : la bande dite « ISM » à 868MHz est utilisée en Europe, la bande à 915MHz est utilisée notamment aux USA, et la bande à 960 MHz est utilisée en Israël.

En plus des bandes de fréquence et du type de protocole, d'autres paramètres peuvent caractériser les modes de communication MCj, MUk, en particulier l'ensemble des commandes CMD compréhensibles par le dispositif ainsi que les paramètres PRM relatifs à chacune de ces commandes.

Comme cela est indiqué sur la figure 1, l'unité de traitement PRS est agencée pour configurer le récepteur RCP de façon à permettre une réception dans une bande de fréquence BF. Ainsi les différentes valeurs techniques des paramètres de configuration cfg du récepteur RCP lui permettant de fonctionner sur différentes fréquences pour un type d'antenne donné. Ces paramètres sont stockés dans une mémoire MEM associée à l'unité de traitement PRS. L'unité de traitement comprend d'autres éléments non représentés comme notamment un circuit d'horloge permettant de calculer des temporisations.

Le dispositif comprend par ailleurs une unité d'alimentation électrique PWR agencée de façon à fournir une alimentation électrique dont les caractéristiques de sortie sont indépendantes des caractéristiques d'entrée, en particulier une alimentation par batteries ou une alimentation à découpage.

L'utilisation d'une alimentation à découpage permet d'utiliser en aval de cette alimentation des composants identiques quelle que soit la tension d'entrée de l'alimentation à découpage. Ces dispositions permettent de rendre le dispositif compatible avec le réseau électrique du pays dans lequel il est installé. Une alimentation à découpage peut notamment être utilisée lorsque le dispositif est intégré dans un actionneur comme nous le détaillons ci-après. Dans le cas de l'intégration du dispositif dans une télécommande bidirectionnelle comme cela sera également détaillé, des piles ou batteries peuvent assurer une alimentation dont les caractéristiques sont indépendantes du réseau électrique local.

Le fonctionnement du dispositif de communication DC va être à présent décrit. Comme déjà mentionné, le dispositif de communication DC présente deux modes de fonctionnement distincts, un premier mode de fonctionnement de configuration F1 et un deuxième mode de fonctionnement opérationnel F2.

L'unité de traitement PRS est agencée pour mettre en oeuvre son premier mode de fonctionnement de configuration F1 en particulier dans les cas suivants :
- lors de la première mise sous tension du dispositif, notamment en mode usine ;
- à l'initiative d'un installateur, lors de l'installation ou d'une mise à jour sur site, notamment lors d'une opération de maintenance, ou lors d'un changement de réglementation, correspondant par exemple à de nouvelles bandes de fréquences ou à de nouveaux protocoles de communication autorisés.
- à l'initiative d'un utilisateur, lors d'une mise à jour par l'intermédiaire d'une connexion internet à un serveur et d'une interface homme-machine pouvant être intégrée au dispositif ou déportée.
- lors d'une mise à jour déclenchée par le logiciel embarqué dans l'unité de traitement, le déclenchement de la mise à jour étant occasionné par un évènement comme une détection d'une erreur dans le fonctionnement de l'actionneur ou encore lors d'un autotest réalisé par le logiciel.

Dans ce premier mode de fonctionnement de configuration F1, l'unité de traitement PRS est agencée de façon à recevoir un signal reçu RS par le récepteur RCP selon un mode de communication de configuration MCi et définir un mode de communication opérationnel MUO en fonction du contenu du signal reçu RS selon le mode de communication de configuration MCj.

Il est à noter que selon une première variante de réalisation de l'invention, un seul mode de communication de configuration MC est défini. Dans ce cas, le format des signaux reçus est interprété de façon univoque selon ce mode de communication de configuration unique.

Selon une seconde variante de réalisation de l'invention, plusieurs modes de communication de configuration MCj peuvent être interprétés par le dispositif.

Dans ces conditions, l'unité de traitement PRS est agencée de façon à analyser des signaux reçus RS par le récepteur RCP en provenance d'une source SRC de façon à identifier si au moins une séquence d'un premier signal reçu RS peut être interprétée comme étant conforme à un mode de communication MCj parmi la pluralité de modes de communication de configuration MC1 à MCp utilisables par le dispositif de communication DC.

Un exemple de trame d'un mode de communication utilisable pour la commande d'un équipement mobile du bâtiment est décrit en référence à la figure 5.

Une telle trame TR est introduite par exemple par des impulsions de synchronisation, et comprend :
- des données de synchronisation SYNC logiques, qui permettent de détecter le début de la trame,
- des données d'adressage ADDR qui permettent d'identifier l'émetteur et/ou le ou les destinataires de la trame,
- des données constituant une charge utile PLD dont le contenu dépend du type de commande/d'opération effectuée.,
- des données relatives à un code de vérification d'erreur, par exemple un code de redondance cyclique CRC,
- d'éventuelles données additionnelles ADD, comprenant par exemple une clé de cryptage.

Selon le type de trame utilisé, le nombre de champs, leur longueur et leur contenu peut évoluer. Il est donc possible d'identifier si une trame est conforme à un protocole donné et est une trame valide par exemple en comparant la conformité d'une séquence du signal reçu RS avec le préambule comprenant les données de synchronisation SYNC d'une trame appartenant au type de protocole Pj correspondant à un mode de communication particulier.

La reconnaissance de ce préambule permet de confirmer que le décodage radiofréquence, le décodage des éléments binaires, le débit et la séquence du signal sont conformes à celle du mode de communication sélectionné, ce qui dans la plupart des cas est suffisant à sa caractérisation.

Il est également possible de réaliser un calcul d'un code de vérification d'erreur, et de comparer le résultat du calcul à la valeur du code de vérification d'erreur CRC compris dans la trame, ou de vérifier si la longueur de la trame et le format de celle-ci correspond à un type de protocole donné. D'autres caractéristiques concernant la fréquence, la modulation, le débit du signal reçu, qui sont caractéristiques d'un type de protocole donné, peuvent être analysés par l'unité de traitement.

L'application des mesures définies ci-dessus permet donc de réaliser la caractérisation d'un mode de communication de configuration particulier MCj dans le cas où le dispositif est agencé pour traiter des signaux selon plusieurs de ces modes.

Suite à la reconnaissance d'un signal et à l'interprétation de son contenu selon un mode de communication de configuration, une détermination du mode de communication opérationnel devant être utilisé dans le second mode de fonctionnement F2 est réalisée. Cette détermination peut être réalisée selon différentes variantes de réalisation.

Selon une première variante de réalisation, le contenu de la trame reçue selon le mode de communication de configuration comprend l'ensemble des paramètres de définition du mode de communication opérationnel. Ainsi, le type de protocole PI et la bande de fréquence BFm sont définis dans les champs de la trame reçue selon le mode de communication de configuration MCj, par exemple dans les champs de commande CMD, et/ou de paramètres PRM de la trame reçue.

Selon une seconde variante de réalisation, un échange peut être établi entre l'outil de configuration SRC et le dispositif DC pour la détermination du mode de communication opérationnel MUO.

Ainsi, dans un premier temps, l'outil de configuration SRC va envoyer un message de requête pour connaître les modes de communication opérationnels MUk susceptibles d'être mis en oeuvre par le dispositif de communication DC. Alternativement, si le mode de communication opérationnel MUO souhaité n'est pas présent dans la liste communiquée, un téléchargement de tout ou partie des paramètres définissant un nouveau mode de communication opérationnel peut être déclenché vers le dispositif DC.

Pour la mise en oeuvre d'un mode de fonctionnement qui nécessite uniquement un changement de fréquences radio BF, l'outil transmet au dispositif de communication les informations nécessaires à la programmation des circuits radio.

Il est à noter que ces informations varient en fonction de la version matérielle du dispositif de communication. L'outil peut obtenir l'information concernant cette version matérielle par une réponse directe si le dispositif de communication est bidirectionnel, ou par une autre voie de retour comme des séquences de mouvements du moteur, ou par un étiquetage de l'actionneur.

Les paramètres radio peuvent être transmis sous forme de tableau prédéfini ou par une suite de paires (adresse, valeur) correspondant aux adresses des registres mappés en mémoire du dispositif de communication et aux valeurs à écrire à ces adresses.

Les valeurs par défaut des registres sont configurées pour un fonctionnement dans le (ou un des) mode(s) de communication de configuration.

Selon une troisième variante de réalisation, il est envisageable qu'un téléchargement simple de tout ou partie des paramètres définissant un nouveau mode de communication opérationnel soit déclenché vers le dispositif DC, ou encore de tout ou partie du composant logiciel destiné à l'interprétation du mode de communication opérationnel, sans réalisation préalable d'une interrogation des modes de communication susceptibles d'être mis en oeuvre par ce dispositif.

En alternative, un nouveau logiciel, comprenant une nouvelle pile de protocole Pj, peut être téléchargé par l'outil.

Le dispositif de communication peut être informé du passage en phase de téléchargement d'un nouveau logiciel par une séquence prédéfinie, par exemple :
- Commande d'arrêt du moteur
- Emission par l'outil d'un signal suivant une séquence prédéfinie.

Alternativement, l'outil peut envoyer une commande spécifique pour demander au dispositif de communication de passer en phase de téléchargement.

Le dispositif peut effacer le logiciel applicatif enregistré dans sa mémoire réinscriptible et garder uniquement le logiciel de téléchargement. Ce logiciel, connu sous le nom anglais « boot loader » permet de transmettre de manière fiable le nouveau logiciel applicatif, par exemple en utilisant des paquets de taille prédéfinie (512 octets) ; la réception correcte de ces paquets est confirmée par le dispositif de communication, qui envoie un message d'acquittement à l'outil.

Si le dispositif est installé et utilise pour son fonctionnement des paramètres fonctionnels à réutiliser après le téléchargement, le procédé de téléchargement peut comprendre une sous-étape de sauvegarde de ces paramètres préalable au téléchargement et une étape de restauration des paramètres, ultérieure au téléchargement.

Selon ces différentes variantes de réalisation, suite au choix d'un mode de communication opérationnel MUO, les commandes à utiliser et/ou des paramètres de commandes possibles se rapportant à ces commandes peuvent être optionnellement définis par une communication avec l'outil de configuration SRC.

Il est à noter que la source SRC est constituée par exemple par un outil de configuration. Un tel outil comprend de préférence des moyens d'interface pour un opérateur permettant de sélectionner le mode de communication opérationnel MUO devant être utilisé par un dispositif de communication DC, ainsi que le mode de communication de configuration MCj devant être utilisé. L'outil, qui peut revêtir un aspect semblable à celui d'une télécommande permet d'émettre des signaux, suite par exemple à l'appui d'une touche de commande, ces signaux correspondant au mode de communication de configuration déterminé

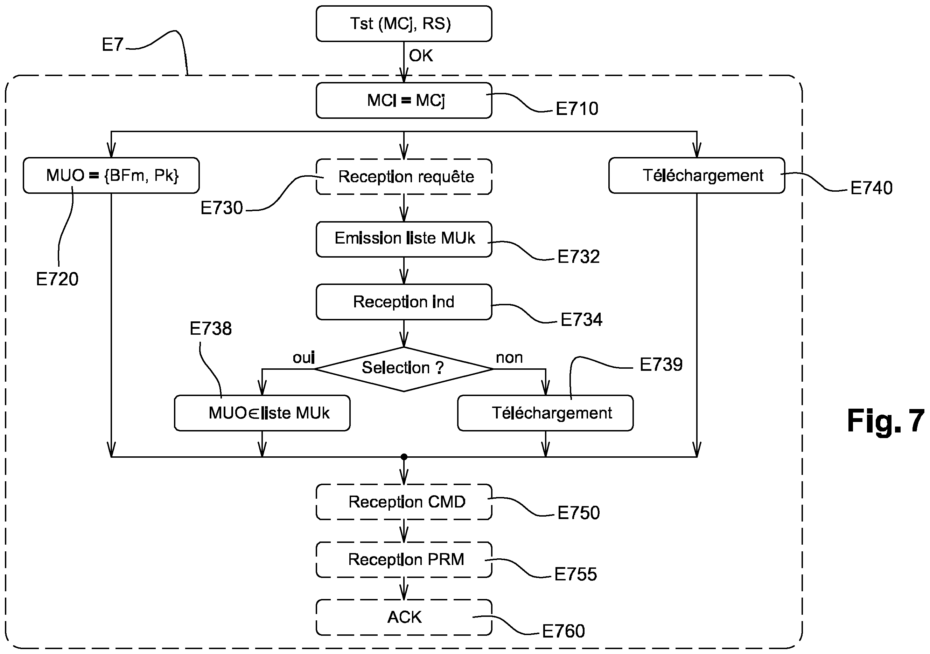

Le fonctionnement de l'unité de traitement PRS correspond à la mise en oeuvre d'un procédé dont les étapes sont décrites ci-dessous en référence aux figures 6 et 7.

Le mode de mise en oeuvre décrit sur la figure 6 correspond à une variante dans laquelle plusieurs modes de communication de configuration MCj sont susceptibles d'être mis en oeuvre par le dispositif de communication DC.

Comme cela est visible sur la figure 6, dans une première étape E1, le premier mode de fonctionnement F1 est sélectionné dans le but final de déterminer un mode de communication opérationnel MUO à utiliser.

Dans une seconde étape E2, un premier mode de communication de configuration MCj est sélectionné parmi une pluralité de mode de communication MC1 à MCp pouvant être traités par le dispositif de communication DC.

Dans une troisième étape E3, un test est effectué pour identifier si un changement de configuration du composant récepteur RCP est nécessaire au fonctionnement dans ce mode de communication de configuration MCj.

Si la réponse est positive, une quatrième étape E4 de configuration est effectuée. Sinon, la cinquième étape E5 est effectuée.

Dans la quatrième étape E4, les paramètres techniques de configuration cfg du composant récepteur RCP sont réglés par l'unité de traitement PRS, qui stocke dans une mémoire MEM ces paramètres pour chaque mode de communication de configuration MCj. La configuration est en particulier nécessaire lorsque le mode de communication MCj courant correspond à une bande de fréquence BFk différente de celle du mode de communication précédemment utilisé ou lors de la première utilisation du dispositif de communication DC.

Dans une cinquième étape E5, une opération d'écoute Lst est réalisée, afin de capter un signal éventuellement envoyé par une source SRC. Cette étape d'écoute s'achève lorsqu'un signal RS est reçu ou lorsqu'une période de temps déterminée Tj s'est écoulée sans réception de signal. Dans le cas ou un signal RS est reçu, une sixième étape est effectuée. Dans le cas ou une période de temps prédéterminée Tj s'est écoulée sans réception d'un signal, la seconde étape E2 de choix d'un mode de communication de configuration différent est effectuée.

Dans la sixième étape E6, une opération de test est effectuée pour identifier si le signal reçu RS est susceptible d'être interprété comme étant conforme au de communication de configuration MCj, comme cela a été décrit ci-dessus.

Si le résultat du test est positif, une septième étape E7 est effectuée. Si le résultat du test est négatif, la seconde étape de choix d'un mode de communication de configuration différent est effectuée.

Dans la septième étape E7, la définition du mode de communication opérationnel MUO est réalisée en fonction du signal reçu RS et interprété conformément au mode de communication de configuration MCj. Cette septième étape sera décrite ultérieurement de façon plus détaillée en référence à la figure 7.

Si un mode de communication opérationnel MUO a été défini dans cette septième étape, une huitième étape E8 est effectuée. Dans le cas contraire, la cinquième étape E5 d'écoute est à nouveau effectuée.

Dans la huitième étape E8, un test est effectué pour identifier si un changement de configuration du composant récepteur RCP est nécessaire pour prendre en compte le mode de communication opérationnel MUO.

Si la réponse est positive, une neuvième étape E9 de configuration est effectuée. Sinon, la dixième étape E10 est effectuée.

Dans la neuvième étape E9, les paramètres techniques de configuration cfg du composant récepteur RCP sont réglés par l'unité de traitement PRS, qui stocke dans une mémoire MEM ces paramètres pour chaque mode de communication opérationnel MUk. La configuration est en particulier nécessaire lorsque le mode de communication opérationnel MUO défini correspond à une bande de fréquence BFk différente de celle du mode de communication précédemment utilisé.

Dans la dixième étape E10 le mode de communication opérationnel MUO est choisi comme mode de communication à utiliser par le dispositif de communication DC dans mode de fonctionnement opérationnel F2. Dans ce mode de fonctionnement F2, le dispositif de communication DC est agencé de façon à interpréter les signaux reçus RS2 comme des signaux de commande conformément au mode de communication opérationnel MUO défini dans le mode de fonctionnement de configuration F1.

Nous allons à présent décrire en détail la septième étape E7 du procédé décrit en figure 6, en référence à la figure 7. Il est à noter que sur la figure 7, certaines étapes sont indiquées en pointillés pour signifier leur caractère optionnel.

La figure 7 représente la mise en oeuvre de la septième étape E7 de définition du mode de communication opérationnel MUO. Différents modes de mises en oeuvre du procédé sont représentés sur cette figure.

Suite à l'étape E6, si le signal RS est conforme au mode de communication de configuration sélectionné MCj, ce mode de communication MCj est déterminé comme mode de communication de configuration déterminé MCi lors d'une étape E710. ensuite le mode de communication opérationnel MUO est réalisée de façon différente pour différentes variantes de mise en oeuvre du procédé.

Selon une première variante de mise en oeuvre du procédé, dans une étape E720, le mode de communication opérationnel MUO est déterminé par le contenu du signal reçu RS, qui comprend l'ensemble des paramètres de définition de celui-ci. Ainsi, le type de protocole PI et la bande de fréquence BFm sont définis dans les champs de la ou des trames reçues conformément au mode de communication de configuration déterminé MCi, par exemple dans la charge utile PLD.

Selon une seconde variante de mise en oeuvre du procédé, une étape E730 est exécutée dans laquelle le dispositif de communication DC interprète le signal reçu RS comme une requête envoyée par l'outil de configuration SRC à destination du dispositif pour connaître les modes de communication opérationnels susceptibles d'être mis en oeuvre MUk par le dispositif de communication DC. A noter que la requête peut être contenue explicitement dans le premier signal reçu RS, ou que la conformité d'au moins une partie du premier signal reçu RS, par exemple le préambule, avec le mode de communication de configuration déterminé MCi peut être interprétée par le dispositif de communication DC comme une requête de la part de l'outil de configuration SRC.

Dans un second temps, lors d'une étape E732, le dispositif de communication DC émet un troisième signal TS3 comprenant une liste de modes de communication opérationnels susceptibles d'être mis en oeuvre MUk par le dispositif de communication DC.

Dans un troisième temps, le dispositif de communication DC reçoit, lors d'une étape E734, un quatrième signal RS4 contenant une indication de sélection du mode de communication opérationnel MUO parmi les modes de communication opérationnels susceptibles d'être mis en oeuvre MUk par le dispositif de communication DC.

Dans un quatrième temps, dans une étape E736, un test est effectué pour déterminer si la sélection effectué correspond à un mode de communication opérationnel MUk susceptible d'être mis en oeuvre par le dispositif de communication DC .

Si la sélection effectuée correspond à un mode de communication opérationnel MUk susceptible d'être mis en oeuvre par le dispositif de communication DC, la sélection est prise en compte dans une étape E738.

Alternativement, si le mode de communication opérationnel MUO souhaité n'est pas présent dans la liste communiquée, dans une étape E739, un téléchargement d'un nouveau logiciel applicatif et/ou de tout ou partie des paramètres définissant le nouveau mode de communication opérationnel MUO peut être déclenché vers le dispositif de communication. Les paramètres téléchargés peuvent correspondre par exemple à des paramètres pour prendre en compte une nouvelle bande de fréquence BFm, un nouveau protocole Pk, de nouvelle commandes CMD ou de nouveaux paramètres de commande PRM.

Il est à noter que la fourniture ou la mise à jour des commandes et/ou des paramètres correspondent à des cas concrets, par exemple dans les situations suivantes : la règlementation concernant la vitesse à adopter suite à une détection d'obstacle peut être différente suivant les pays d'installation ; Il est également souhaitable de procéder à l'activation de certaines commandes seulement lorsque l'option correspondante a été payée par un utilisateur final.

Selon une troisième variante de mise en oeuvre, dans une étape E740, un téléchargement simple de tout ou partie des paramètres définissant le nouveau mode de communication opérationnel MUO et/ou du logiciel applicatif correspondant est déclenché vers le dispositif DC.

Ce téléchargement peut être en particulier déclenché sans réalisation préalable d'une interrogation des modes de communication pris en compte par ce dispositif.

Il est à noter que l'étape 740 peut comprendre la réception de plusieurs trames transportant des indications pour effectuer un téléchargement complet du logiciel applicatif.

Ainsi par exemple, une première trame peut contenir une indication de passage en mode téléchargement, puis les trames suivantes peuvent contenir des segments de fichier et les adresses pour stocker ces segments de fichier, puis une dernière trame contenant une indication de fin de téléchargement.

Selon ces différentes variantes de réalisation, suite au choix du mode de communication opérationnel MUO, les commandes à utiliser dans une étape E750 et/ou des paramètres se rapportant à ces commandes dans une étape E755 peuvent être optionnellement définis par une communication avec l'outil de configuration SRC , le dispositif confirmant dans une dernière étape E760 la bonne réception des données relatives au mode de communication opérationnel MUO. Alternativement, la réception des commandes ou paramètres peut s'effectuer peut s'effectuer après le passage dans le mode de fonctionnement opérationnel F2.

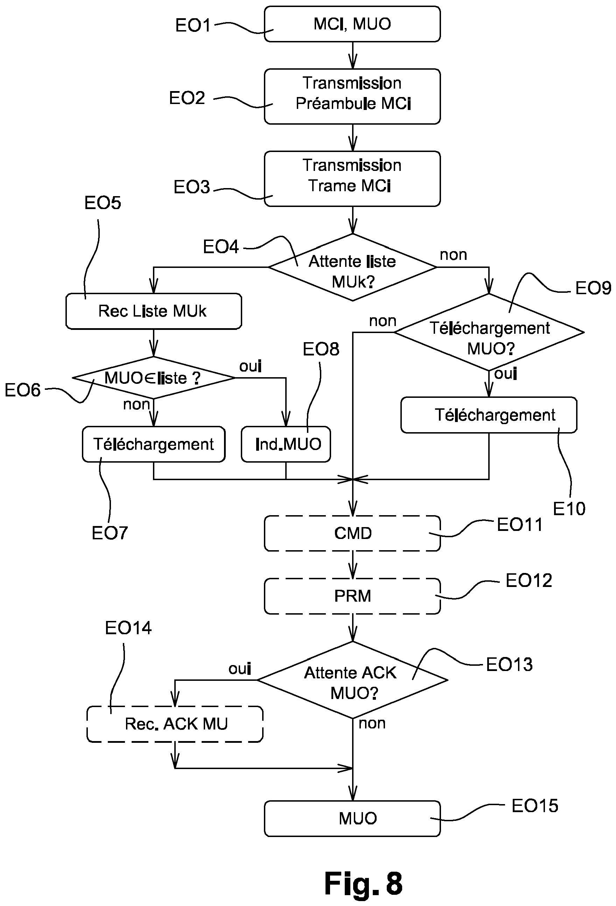

Nous allons à présent décrire en référence à la figure 8 le fonctionnement de l'outil de configuration SRC lors de ces échanges avec le dispositif de communication DC dans le mode de fonctionnement de configuration F1, ce fonctionnement correspondant à la mise en oeuvre d'un procédé de configuration. Il est à noter que sur la figure 8, certaines étapes sont indiquées en pointillés pour signifier leur caractère optionnel

Dans une première étape E01, un choix du mode de communication de configuration MCi et d'un mode de communication opérationnel MUO est réalisé. A noter que la sélection du mode de communication opérationnel MUO peut être effectuée ultérieurement, comme sera expliqué par la suite.

Dans une seconde étape E02, une transmission d'un signal contenant le préambule d'une trame selon le mode de communication de configuration MCi est réalisée.

Dans une troisième étape E03, une transmission de la trame selon le mode de communication de configuration MCi contenant des informations sur le mode de communication opérationnel MUO est réalisée.

Selon une première variante de réalisation, dans une quatrième étape E04, une attente d'une liste de modes de communication opérationnels MUk susceptibles d'être mis en oeuvre par le dispositif de communication DC est observée.

Puis dans une cinquième étape E05, la liste de modes de communication opérationnels MUk susceptibles d'être mis en oeuvre par le dispositif de communication DC est reçue du dispositif de communication DC.

Dans une sixième étape E06, on vérifie si le mode de communication opérationnel MUO sélectionné est présent dans la liste reçue du dispositif. Si ce n'est pas le cas, l'outil de configuration SRC peut faire un autre choix du mode de communication opérationnel MUO dans la liste fournie par le dispositif de communication DC.

A noter que l'outil de configuration SRC peut attendre la réception de cette liste pour choisir le mode de communication opérationnel MUO,

Ensuite, dans une huitième étape E08, une indication sur le mode MUO sélectionné dans la liste est fournie au dispositif.

Alternativement, dans une septième étape E07, si le mode de communication opérationnel MUO sélectionné n'est pas présent dans la liste des modes de communication MUk susceptibles d'être mis en oeuvre par le dispositif de communication et si l'outil de configuration SRC n'effectue pas un nouveau choix dans cette liste, au moins un signal RS contenant les données de téléchargement relatif à ce mode de communication opérationnel MUO est envoyé au dispositif.

Selon une seconde variante après l'étape E04, la liste des modes de communication susceptibles d'être mis en oeuvre par le dispositif de communication DC n'est pas fournie par le dispositif, et un téléchargement direct des paramètres de définition du mode de communication opérationnel MUO et/ou d'un composant logiciel est réalisé dans les étapes E09/E010.

Ce téléchargement concerne notamment tout ou partie du composant logiciel destiné à l'interprétation du mode de communication opérationnel MUO.

Selon la première ou la seconde variante, suite au choix d'un mode de communication opérationnel MUO, les commandes à utiliser, dans une étape E011, et/ou des paramètres se rapportant à ces commandes, dans une étape EO12, sont transmis par l'outil de configuration SRC au dispositif de communication DC. Alternativement, la transmission des commandes ou paramètres peut s'effectuer après le passage dans le mode de fonctionnement opérationnel F2.

Ensuite, de façon optionnelle, dans une étape EO13, la confirmation de la bonne réception des données relatives au mode de communication opérationnel MUO peut être attendue. Enfin, le mode de communication opérationnel MUO est confirmé comme étant le mode de communication opérationnel dans une étape optionnelle E015.

En ce qui concerne le choix ou des modes de communication de configuration, les éléments suivants sont à considérer :
- En choisissant un seul mode de communication de configuration MC, pout tous pays, par exemple à une fréquence de 868MHz et un format de trame de type RTS, une solution simple est obtenue, qui peut être utilisée pour le premier chargement du logiciel, la mise en place des dispositifs ne nécessitant que le chargement d'un mode de communication de configuration dans leur logiciel embarqué ;
- En choisissant un mode de communication de configuration par zone géographique, par exemple un mode pour les Etats-Unis, un mode pour l'Europe, un mode pour l'Asie, il apparaît que le dispositif peut « déduire » du mode de communication de configuration utilisé des informations supplémentaires sur les protocoles et bandes de fréquence utilisées, en fonction de données stockées dans sa mémoire ;
- En choisissant un mode de communication de configuration par groupe de fréquence, à savoir par exemple un premier groupe comprenant les fréquences à 315 / 433 MHz et un second groupe comprenant les fréquences à 868 / 915 / 960 MHz, il est possible d'utiliser des antennes présentant un sensibilité améliorée par groupe de fréquence.

Il est à noter qu'il est avantageux de choisir un nombre de modes de communication de configuration limité, de façon à ce que la durée de l'émission du préambule d'une trame soit supérieur à la somme des temps d'écoute Tj pour l'ensemble des modes de communication de configuration MC1 à MCp.

Il est par ailleurs possible de choisir le mode de communication de configuration en fonction :
- du site, dans le cas par exemple de l'installation dans un réseau existant.
- d'une écoute de l'environnement RF, pour choisir un mode de communication de configuration assurant une qualité de transmission optimale.

Le choix du mode de communication de configuration peut enfin être effectué :
- Par l'utilisateur, via une interface homme-machine disponible sur l'outil ;
- Par connexion à un serveur distant, par exemple en accédant à une base de données, éventuellement en fonction de la localisation de l'outil.

Il est également possible de prévoir que l'ensemble des modes de communication de configuration de l'outil corresponde à l'ensemble des modes de communication opérationnels possibles, afin de ne réaliser qu'une seule configuration en production par produit

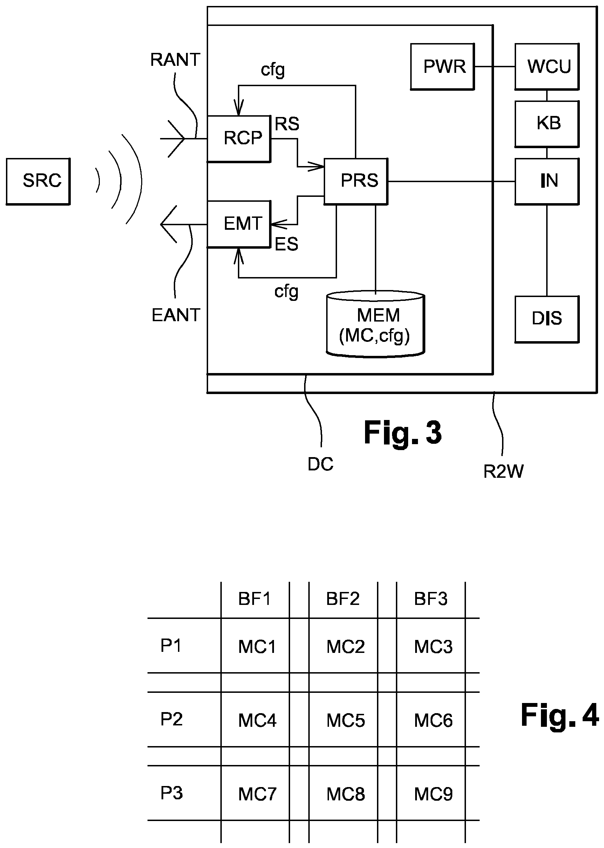

Nous allons à présent décrire en référence aux figures 2 et 3 des modes de réalisation de l'invention utilisables dans le cas de modes de communication bidirectionnels, comme par exemple les modes de communications utilisant le protocole io-homecontrol®.

Selon un second mode de réalisation représenté sur la figure 2, le dispositif de communication DC comprend, en plus du récepteur RCP, un composant d'émission EMT, associé à une antenne d'émission EANT, le dispositif de communication DC étant agencée pour configurer le cas échéant le composant d'émission EMT.

Dans ce cas, le dispositif de communication DC procède à la configuration à la fois de son émetteur EMT et de son récepteur RCP pour s'assurer d'une réception et d'une émission dans une ou des bande(s) de fréquence déterminée(s).

Ce dispositif de communication DC est intégré dans un actionneur électromécanique ACT. L'actionneur ACT comprend un moteur M, une unité de commande pouvant être distincte ou confondue avec l'unité de traitement PRS , l'unité de commande étant agencée pour commander le moteur M en fonction de signaux reçus par le récepteur RCP selon le mode de communication opérationnel MUO.

Selon un troisième mode de réalisation représenté sur la figure 3, le dispositif de communication DC comprend les mêmes éléments que dans le second mode de réalisation. Le dispositif de commande est intégré dans une télécommande bidirectionnelle R2W. Une telle télécommande comprend une interface IN utilisateur comprenant un clavier de commande KB et éventuellement un écran DIS d'affichage d'information pour un utilisateur. Ces deux éléments peuvent être également combinés sous forme d'un écran tactile.

Les éléments de l'interface utilisateur IN sont reliés à l'unité de traitement PRS

La télécommande peut également comprendre une unité de contrôle de réveil WCU, dont le but est d'activer l'unité de traitement PRS, l'émetteur radiofréquences EMT, et le récepteur RCP lorsqu'une touche du clavier est enfoncée, en reliant ces éléments à l'unité d'alimentation PWR.

Ces dispositions permettent de ne consommer de l'énergie que lorsqu'un signal de commande doit être émis. Les moyens de réception ne sont actifs de façon générale que pour une courte période après l'émission d'un signal par le composant d'émission, afin de collecter un signal émis en réponse par le dispositif destinataire du signal de commande.

Dans le cadre d'une mise en oeuvre du mode de fonctionnement de configuration F1 d'un dispositif selon l'invention, il peut donc être nécessaire de prévoir l'actionnement d'une touche spécifique par l'utilisateur pour « réveiller » la télécommande R2W et ainsi permettre l'alimentation de l'unité de traitement PRS et du récepteur RCP par l'unité d'alimentation PWR.

Il convient ensuite de fournir un signal aux moyens de réception RCP pour permettre une reconnaissance du mode de communication de configuration.

Ce signal peut être émis par une source SRC constituée par exemple par un outil de configuration tel que décrit précédemment.

En ce qui concerne la réalisation de l'émetteur, de l'unité de traitement et éventuellement du récepteur contenus dans le dispositif, il apparaît que ces différents éléments peuvent être contenus sur un même circuit imprimé, ou réalisés de façon séparée.

Les fonctions décrites ci-dessus, à savoir notamment, la démodulation des signaux (par exemple des signaux en RF), le décodage/vérification du format de trame, la définition du mode de communication opérationnel, l'interprétation des signaux reçus comme signaux de commande, peuvent être réalisés dans une configuration en un seul circuit qui comprend un sous-ensemble dédié aux fonctions de communication (notamment RF), une partie optionnelle de logique câblée et un processeur, ou encore une configuration en deux circuits comprenant par exemple :
- un premier circuit comprenant les fonctions de communication et une partie de logique câblée, et un second circuit comprenant le processeur, ou encore
- un premier circuit comprenant les fonctions de communication et un second circuit comprenant une partie de logique câblée et le processeur, ou encore
- un premier circuit comprenant les fonctions de communication et un second circuit comprenant le processeur.

Il apparaît que les opérations de décodage et vérification du code d'erreur peuvent être réalisées par le composant de réception, par une partie de circuit en logique câblée ou par un processeur générique.

Il est à noter que l'utilisation des dispositifs selon l'invention ne complexifie pas le processus de fabrication et d'étalonnage des dispositifs. En particulier, lors de la validation d'un dispositif sur une fréquence donnée, un ajustement de la fréquence de fonctionnement est réalisé en modifiant la configuration d'un quartz présent dans le composant récepteur.

Il apparaît bien entendu que les différents modes de réalisations détaillés ci-dessus ne constituent que des exemples de mises en oeuvre de l'invention telle que définie par les revendications ci-jointes. Des variantes de ces différents modes de réalisations peuvent être envisagées et les différents modes de réalisations décrits peuvent être combinés de façon aisée par l'homme du métier.

## Revendications

1. Procédé de fonctionnement d'un dispositif de communication (DC) pour la commande à distance d'un actionneur (ACT) pour un équipement mobile (ME) du bâtiment comprenant les étapes consistant à :
a) recevoir un premier signal (RS) selon un mode de communication de configuration déterminé (MCi),
b) définir (E7) un mode de communication opérationnel (MUO) en fonction d'au moins une partie du contenu du premier signal reçu (RS),
c) recevoir un deuxième signal (RS2) selon le mode de communication opérationnel (MUO),
d) interpréter le deuxième signal reçu (RS2) conformément au mode de communication opérationnel (MUO), de façon à identifier des données de commande dans le deuxième signal reçu (RS2) ;
et dans lequel la définition du mode de communication opérationnel (MUO) comprend :
- une étape de téléchargement (E755) des paramètres de définition du mode de communication opérationnel (MUO) ; et/ou
- une étape de téléchargement (E739, E740) d'un composant logiciel.

2. Procédé selon l'une des revendications précédentes, dans lequel plusieurs modes de communication de configuration (MC1 à MCp) sont utilisables par le dispositif de communication (DC), et dans lequel une écoute de signaux reçus (RS) selon la pluralité de modes de communication de configuration utilisables (MC1 à MCp) est réalisée.

3. Procédé selon la revendication 2, dans lequel la détermination du mode de communication de configuration (MCi) pour le dispositif de configuration (DC) comprend des étapes consistant à :
a') Sélectionner (E2) un mode de communication de configuration particulier (MCj) parmi une pluralité de modes de communication de configuration utilisables (MC1 à MCp) par le dispositif de communication (DC),
b') Attendre (E5) la réception d'un signal (RS) pendant un intervalle de temps déterminé (Tj),
c') Si aucun signal n'est reçu dans l'intervalle de temps déterminé (Tj), retourner à l'étape a') de sélection d'un mode de communication particulier en sélectionnant un autre mode de communication de configuration parmi la pluralité de modes de communication de configuration utilisables (MC1 à MCp) par le dispositif de communication (DC),
d') Si un signal est reçu dans l'intervalle de temps déterminé (Tj), procéder (E6) à une tentative d'interprétation du signal reçu (RS) selon le mode de communication de configuration sélectionné (MCj) ;
e') Si le signal reçu (RS) est conforme au mode de communication de configuration sélectionné (MCj), définir (E710) ledit mode de communication de configuration sélectionné (MCj) comme mode de communication de configuration déterminé (MCi) du dispositif (DC) ;
f') Si le signal reçu (RS) n'est pas conforme au mode de communication sélectionné (MCj), retourner à l'étape a') de sélection d'un mode de communication de configuration particulier en sélectionnant un autre mode de communication de configuration parmi la pluralité de modes de communication de configuration utilisables (MC1 à MCp) par le dispositif de communication (DC).

4. Procédé de configuration d'un dispositif de communication (DC) pour la commande à distance d'un actionneur (ACT) pour un équipement mobile (ME) du bâtiment comprenant les étapes consistant à :
a") définir (E01) un mode de communication opérationnel (MUO) à utiliser par le dispositif de communication (DC) ;
b") générer au moins un signal (RS) selon un mode de communication de configuration déterminé (MCi), dont le contenu comprend des informations relatives au mode de communication opérationnel (MUO) à utiliser par le dispositif de communication (DC) ;
et dans lequel l'étape b") de génération du signal (RS) selon le mode de communication de configuration déterminé (MCi) comprend :
- une sous-étape de téléchargement (E012) des paramètres de définition du mode de communication opérationnel (MUO) ; et/ou
- une sous-étape de téléchargement (E07, E010) d'un composant logiciel.

5. Dispositif de communication (DC) pour la commande à distance d'un actionneur (ACT) pour un équipement mobile (ME) du bâtiment comprenant un récepteur (RCP) et une unité de traitement des données (PRS) destinée à recevoir un signal (RS, RS2, RS4) en provenance du récepteur (RCP) et à traiter ce signal reçu (RS, RS2, RS4) conformément à un mode de communication (MCi, MCj, MUO), le dispositif de communication (DC) étant agencé pour mettre en oeuvre un procédé selon l'une des revendications 1 à 3.

6. Actionneur électromécanique (ACT) pour un équipement mobile (ME) du bâtiment comprenant un dispositif de communication (DC) selon la revendication 5, et un moteur (M), une unité de commande pouvant être distincte ou confondue avec l'unité de traitement (PRS), l'unité de commande étant agencée pour commander le moteur (M) en fonction de signaux reçus (RS2) par le récepteur (RCP) selon le mode de communication opérationnel (MUO).

7. Télécommande bidirectionnelle (R2W) pour la commande à distance d'un actionneur (ACT) pour un équipement mobile (ME) du bâtiment comprenant un dispositif de communication (DC) selon la revendication 5.

8. Outil de configuration (SRC) d'un dispositif de communication (DC) pour la commande à distance d'un actionneur (ACT) pour un équipement mobile (ME) du bâtiment, l'outil de configuration (SRC) étant agencé pour la mise en oeuvre d'un procédé de configuration selon la revendication 4, et comprenant un émetteur et une unité de traitement.

## Patentansprüche

1. Verfahren zum Betreiben einer Kommunikationsvorrichtung (DC) zur Fernsteuerung eines Aktors (ACT) für ein mobiles Gerät (ME) aus dem Bauwesen, die folgenden Schritte umfassend:
a) Empfangen eines ersten Signals (RS) gemäß einem bestimmten Konfigurationskommunikationsmodus (MCi),
b) Definieren (E7) eines operativen Kommunikationsmodus (MUO) in Abhängigkeit von zumindest einem Teil des Inhalts des ersten empfangenen Signals (RS),
c) Empfangen eines zweiten Signals (RS2) gemäß dem operativen Kommunikationsmodus (MUO),
d) Interpretieren des zweiten empfangenen Signals (RS2) in Übereinstimmung mit dem operativen Kommunikationsmodus (MUO), um Steuerungsdaten im zweiten empfangenen Signal (RS2) zu identifizieren;
und wobei die Definition des operativen Kommunikationsmodus (MUO) umfasst:
- einen Schritt zum Herunterladen (E755) der Definitionsparameter des operativen Kommunikationsmodus (MUO); und/ oder
- einen Schritt zum Herunterladen (E739, E740) einer Softwarekomponente.

2. Verfahren nach einem der vorhergehenden Ansprüche, wobei mehrere Konfigurationskommunikationsmodi (MC1 bis MCp) durch die Kommunikationsvorrichtung (DC) nutzbar sind, und wobei ein Abhören der empfangenen Signale (RS) gemäß der Vielzahl von nutzbaren Konfigurationskommunikationsmodi (MC1 bis MCp) durchgeführt wird.

3. Verfahren nach Anspruch 2, wobei die Bestimmung des Konfigurationskommunikationsmodus (MCi) für die Konfigurationsvorrichtung (DC) die folgenden Schritte umfasst:
a') Auswählen(E2) eines bestimmten Konfigurationskommunikationsmodus (MCj) aus einer Vielzahl von durch die Kommunikationsvorrichtung (DC) nutzbaren Konfigurationskommunikationsmodi (MC1 bis MCp),
b') Warten (E5) auf den Empfang eines Signals (RS) während eines festgelegten Zeitintervalls (Tj),
c') wenn innerhalb des festgelegten Zeitintervalls (Tj) kein Signal empfangen wird, zurückkehren zum Schritt a') zur Auswahl eines bestimmten Konfigurationskommunikationsmodus mit der Auswahl eines anderen Konfigurationskommunikationsmodus aus der Vielzahl von durch die Kommunikationsvorrichtung (DC) nutzbaren Konfigurationskommunikationsmodi (MC1 bis MCp),
d') wenn innerhalb des festgelegten Zeitintervalls (Tj) ein Signal empfangen wird, Durchführen (E6) eines Versuchs einer Interpretation des empfangenen Signals (RS) gemäß dem ausgewählten Konfigurationskommunikationsmodus (MCj);
e') wenn das empfangene Signal (RS) dem ausgewählten Konfigurationskommunikationsmodus (MCj) entspricht, Definieren (E710) des besagten ausgewählten Konfigurationskommunikationsmodus (MCj) als bestimmten ausgewählten Konfigurationskommunikationsmodus (MCi) der Vorrichtung (DC);
f') wenn das empfangene Signal (RS) nicht dem ausgewählten Konfigurationskommunikationsmodus (MCj) entspricht, zurückkehren zum Schritt a') zur Auswahl eines bestimmten Konfigurationskommunikationsmodus mit der Auswahl eines anderen Konfigurationskommunikationsmodus aus der Vielzahl von durch die Kommunikationsvorrichtung (DC) nutzbaren Konfigurationskommunikationsmodi (MC1 bis MCp).

4. Verfahren zum Konfigurieren einer Kommunikationsvorrichtung (DC) zur Fernsteuerung eines Aktors (ACT) für ein mobiles Gerät (ME) aus dem Bauwesen, die folgenden Schritte umfassend:
a") Definieren (EO1) eines operativen Kommunikationsmodus (MUO), der durch die Kommunikationsvorrichtung (DC) zu verwenden ist;
b") Generieren zumindest eines Signals (RS) gemäß einem bestimmten Konfigurationskommunikationsmodus (MCi), dessen Inhalt Informationen in Bezug auf den operativen Kommunikationsmodus (MUO) umfasst, der durch die Kommunikationsvorrichtung (DC) zu verwenden ist;
und wobei der Schritt b") zum Generieren des Signals (RS) gemäß dem bestimmten Konfigurationskommunikationsmodus (MCi) umfasst:
- einen Unterschritt zum Herunterladen (E012) der Definitionsparameter des operativen Kommunikationsmodus (MUO); und/ oder
- einen Unterschritt zum Herunterladen (E07, E010) einer Softwarekomponente.

5. Kommunikationsvorrichtung (DC) zur Fernsteuerung eines Aktors (ACT) für ein mobiles Gerät (ME) aus dem Bauwesen, einen Empfänger (RCP) und eine Datenverarbeitungseinheit (PRS) umfassend, die dazu bestimmt ist, ein Signal (RS, RS2, RS4) von dem Empfänger (RCP) zu empfangen und dieses empfangene Signal (RS, RS2, RS4) in Übereinstimmung mit einem operativen Kommunikationsmodus (MCi, MCj, MUO) zu verarbeiten, wobei die Kommunikationsvorrichtung (DC) angeordnet ist, um ein Verfahren nach einem der Ansprüche 1 bis 3 anzuwenden.

6. Elektromechanischer Aktor (ACT) für ein mobiles Gerät (ME) aus dem Bauwesen, eine Kommunikationsvorrichtung (DC) nach Anspruch 5 umfassend, und einen Motor (M), wobei sich eine Steuereinheit von der Verarbeitungseinheit (PRS) unterscheiden oder damit zusammenfallen kann, wobei die Steuereinheit angeordnet ist, um den Motor (M) in Abhängigkeit von den vom Empfänger (RCP) empfangenen Signalen (RS2) gemäß dem operativen Kommunikationsmodus (MUO) anzusteuern.

7. Bidirektionale Fernsteuerung (R2W) zur Fernsteuerung eines Aktors (ACT) für ein mobiles Gerät (ME) aus dem Bauwesen, eine Kommunikationsvorrichtung (DC) nach Anspruch 5 umfassend.

8. Konfigurations-Tool (SRC) einer Kommunikationsvorrichtung (DC) zur Fernsteuerung eines Aktors (ACT) für ein mobiles Gerät (ME) aus dem Bauwesen, wobei das Konfigurations-Tool (SRC) für die Anwendung eines Verfahrens zum Konfigurieren nach Anspruch 4 angeordnet ist, und einen Sender und eine Verarbeitungseinheit umfassend.

## Claims

1. A method for operating a communication device (DC) for remotely controlling an actuator (ACT) for a movable equipment (ME) of the building comprising the steps consisting in:
a) receiving a first signal (RS) according to a determined configuration communication mode (MCi),
b) defining (E7) an operational communication mode (MUO) depending on at least one part of the content of the first received signal (RS),
c) receiving a second signal (RS2) according to an operational communication mode (MUO),
d) interpreting the second received signal (RS2) in accordance with the operational communication mode (MUO), so as to identify the control data in the second received signal (RS2);
and in which the definition of the operational communication mode (MUO) comprises:
- a downloading step (E755) of the parameters for defining the operational communication mode (MUO); and/or
- a downloading step (E739, E740) of a software component.

2. The method according to any of the preceding claims, wherein several configuration communication modes (MC1 to MCp) are usable by the communication device (DC), and in which a listening to received signals (RS) according to the plurality of usable configuration communication modes (MC1 to MCp) is performed.

3. The method according to claim 2, wherein the determination of the configuration communication mode (MCi) for the configuration device (DC) comprises steps consisting in:
a') Selecting (E2) a particular configuration communication mode (MCj) among a plurality of usable configuration communication modes (MC1 to MCp) by the communication device (DC),
b') Waiting for (E5) the reception of a signal (RS) during a determined time interval (Tj),
c') If no signal is received within the determined time interval (Tj), returning to step a') for selecting a particular communication mode by selecting another configuration communication mode among the plurality of usable configuration communication modes (MC1 to MCp) by the communication device (DC),
d') If a signal is received within the determined time interval (Tj), proceeding (E6) to an attempt to interpret the received signal (RS) according to the selected configuration communication mode (MCj);
e') If the received signal (RS) is in accordance with the selected configuration communication mode (MCj), defining (E710) said selected configuration communication mode (MCj) as a determined configuration communication mode (MCi) of the device (DC);
f) If the received signal (RS) is not in accordance with the selected communication mode (MCj), returning to step a') for selecting a particular configuration communication mode by selecting another configuration communication mode among the plurality of usable configuration communication modes (MC1 to MCp) by the communication device (DC).

4. The configuration method of a communication device (DC) for remotely controlling an actuator (ACT) for a movable equipment (ME) of the building comprising the steps consisting in:
a") defining (EO1) an operational communication mode (MUO) to be used by the communication device (DC);
b") generating at least one signal (RS) according to a determined configuration communication mode (MCi), whose content comprises information relating to the operational communication mode (MUO) to be used by the communication device (DC);
and wherein the step b") for generating the signal (RS) according to the determined configuration communication mode (MCi) comprises:
- a downloading sub-step (E012) of the parameters for defining the operational communication mode (MUO); and/or
- a downloading sub-step (E07, E010) of a software component.

5. A communication device (DC) for remotely controlling an actuator (ACT) for a movable equipment (ME) of the building comprising a receiver (RCP) and a data processing unit (PRS) intended to receive a signal (RS, RS2, RS4) coming from the receiver (RCP) and to process this received signal (RS, RS2, RS4) in accordance with a communication mode (MCi, MCj, MUO), the communication device (DC) being arranged to implement a method according to any of claims 1 to 3.

6. An electromechanical actuator (ACT) for a movable equipment (ME) of the building comprising a communication device (DC) according to claim 5, and a motor (M), a control unit which may be distinct or combined with the processing unit (PRS), the control unit being arranged to control the motor (M) depending on signals received (RS2) by the receiver (RCP) according to the operational communication mode (MUO).

7. A bidirectional remote control (R2W) for remotely controlling an actuator (ACT) for a movable equipment (ME) of the building comprising a communication device (DC) according to claim 5.

8. A tool (SRC) for configuring a communication device (DC) for remotely controlling an actuator (ACT) for a movable equipment (ME) of the building, the configuration tool (SRC) being arranged for the implementation of a configuration method according to claim 4, and comprising a transmitter and a processing unit.
